**Europäisches Patentamt**

**European Patent Office**

**Office européen des brevets**

(11) Veröffentlichungsnummer: **0 446 468 A1**

## (12) EUROPÄISCHE PATENTANMELDUNG

(21) Anmeldenummer: **90124679.3**

(22) Anmeldetag: **19.12.90**

(51) Int. Cl.5: **C08G 18/10**, C08G 18/42, C08G 18/76

(30) Priorität: **28.02.90 DE 4006248**

(43) Veröffentlichungstag der Anmeldung:
**18.09.91 Patentblatt 91/38**

(84) Benannte Vertragsstaaten:
**AT BE DE ES FR GB IT**

(71) Anmelder: **BAYER AG**

**W-5090 Leverkusen 1 Bayerwerk(DE)**

(72) Erfinder: **Brock, Martin, Dr.**
**Silesiusstrasse 82**
**W-5000 Köln 80(DE)**

(54) **Gemische aus Urethangruppen enthaltenden Prepolymeren und Diisocyanatotoluolen sowie ihre Verwendung.**

(57) Die Erfindung betrifft flüssige Gemische bestehend im wesentlichen aus Urethangruppen enthaltendenden Prepolymeren auf Basis von Polyisocyanaten oder Polyisocyanat-Gemischen der Diphenylmethanreihe und Polyesterpolyolen in Abmischung mit Diisocyanatotoluolen und/oder Polyisocyanaten und die Verwendung dieser Abmischungen als Isocyanatkomponente bei der Herstellung von Polyurethan- Weichschaumstoffen, insbesondere Weichformschaumstoffen.

EP 0 446 468 A1

Die Erfindung betrifft flüssige Gemische bestehend im wesentlichen aus Urethangruppen enthaltenden Prepolymeren auf Basis von Polyisocyanaten oder Polyisocyanat-Gemischen der Diphenylmethanreihe und Polyesterpolyolen in Abmischung mit Diisocyanatotoluolen und/oder Polyisocyanaten und die Verwendung dieser Abmischungen als Isocyanatkomponente bei der Herstellung von Polyurethan-Weichschaumstoffen, insbesondere Weichformschaumstoffen.

Die vorteilhafte Verwendung von Prepolymeren auf der Basis von Polyisocyanaten und OH-funktionellen Verbindungen ist bekannt und in der Literatur ausführlich beschrieben: DE-PS 1 618 380, GB-PS 1 369 334, DE-OS 2 913 126, DE-OS 2 404 166, DE-AS 2 737 338, DE-AS 2 624 526, DE-OS 2 513 793, DE-OS 2 513 798, EP-A 0 010 850, EP-A 0 022 617 und EP-A 111 121.

Diese oben genannten Prepolymere setzen sich aus verschiedenen chemischen Komponenten zusammen. So werden z.B. als Polyolkomponente verschiedene Polyether verwendet, die sich vor allem hinsichtlich Funktionalität, Molekulargewicht, Startermolekül, Ethylenoxid-Anteil oder Ethylenoxid-Propylenoxid-Verteilung unterscheiden können.

Für die Qualität der Prepolymere ist sowohl die Auswahl der Isocyanate, als auch die der Polyolkomponente von großer Bedeutung.

Schon DE-A-38 18 769 zeigt, daß bei gleicher oder ähnlicher Diphenylmethandiisocyanatbasis die Variation der Funktionalität des Polyethers eine weitere, deutliche Verbesserung bringen kann.

Die Prepolymere haben vorteilhafterweise gegenüber den entsprechenden nicht prepolymerisierten Isocyanaten eine höhere Viskosität, so daß die Dosiergenauigkeit der Pumpen verbessert werden kann. Nachteil der Prepolymerisierung ist, daß der NCO-Gehalt der Prepolymere gegenüber den nicht prepolymerisierten Isocyanaten stark abnimmt. Prepolymere haben also im allgemeinen entweder eine geringe Viskosität bei gleichzeitig hohem NCO-Gehalt oder eine hohe Viskosität bei gleichzeitig niedrigem NCO-Gehalt.

Aufgabe war es daher, Prepolymere zur Verfügung zu stellen, die die oben genannten Nachteile nicht aufweisen.

Diese Aufgabe konnte dadurch gelöst werden, daß flüssige Gemische mit Prepolymeren mit hoher Viskosität bei gleichzeitig hohem NCO-Gehalt zur Verfügung gestellt werden konnten.

Gegenstand der Erfindung sind flüssige Gemische einer Viskosität bei 25°C von 5 bis 100 mPas und einem NCO-Gehalt von 35 bis 47 Gew.-% bestehend im wesentlichen aus

a) Urethangruppen enthaltenden, flüssigen Prepolymeren mit einem NCO-Gehalt von 5 bis 30 Gew.-% auf Basis von

    a1) Polyisocyanaten oder Polyisocyanatgemischen der Diphenylmethanreihe und in unterschüssiger Menge

    a2) Polyesterpolyole mit einem Molekulargewicht von 500 bis 10.000 in Abmischung mit

b) Diisocyanatotoluolen und/oder der Komponente a1)

im Gewichtsverhältnis von a) : b) von 1:20 bis 20:1.

Bevorzugt handelt es sich bei der Komponente a2) um Reaktionsprodukte von Dicarbonsäuren oder Anhydriden mit mehrwertigen Alkoholen mit Molekulargewichten von 62 bis 200 im Überschuß.

Als Komponente a2) werden besonders bevorzugt Reaktionsprodukte von Adipinsäure und/oder Terephthalsäure mit Diethylenglykol und/oder Glyzerin eingesetzt.

Als Diisocyanatotoluole werden bevorzugt technische Gemische aus 2,4- mit bis zu 45 Gew.-% 2,6-Diisocyanatotoluol eingesetzt.

Technische Gemische aus 4,4'-, 2,4'- und bis zu 10 Gew.-% 2,2'-Diisocyanatodiphenylmethan oder Gemische dieser Isomerengemische mit ihren höherfunktionellen Homologen, wie sie bei der Phosgenierung von Anilin/Formaldehyd-Kondensaten entstehen, werden vorzugsweise als Komponente a1) eingesetzt.

Das Äquivalenzverhältnis der NCO-Gruppen der Komponente a1) zu den OH-Gruppen der Komponente a2) liegt bevorzugt zwischen 20:1 und 1:5.

Die flüssigen Gemische werden zur Herstellung von elastischen, offenzelligen Weichschaumstoffen, vorzugsweise Formschaumstoffen verwendet.

Bei den Verbindungen a2) mit gegenüber Isocyanatgruppen reaktionsfähigen Gruppen handelt es sich um Polyester des Molekulargewichtsbereichs 500 bis 10.000, vorzugsweise 1.000 bis 7.000, die normalerweise mindestens 2, vorzugsweise endständig angeordnete gegenüber Isocyanatgruppen reaktionsfähige Gruppen aufweisen. Bei diesen gegenüber Isocyanatgruppen reaktionsfähigen Gruppen handelt es sich um an primäre oder sekundäre Kohlenstoffatome gebundene alkoholische Hydroxylgruppen. Die genannten Molekulargewichte können beispielsweise dampfdruckosmometrisch bestimmt werden.

Als Komponente a2) kommen somit die den gemachten Angaben entsprechenden, aus der Polyurethanchemie an sich bekannten Polyesterpolyole in Betracht.

Die Polyesterpolyole können beispielsweise aus mehrbasischen Carbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen, hergestellt werden. Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, und aromatische Dicarbonsäuren, wie Phthalsäure und Terephthalsäure. Beispiele für mehrwertige, insbesondere zwei- und dreiwertige Alkohole sind: Ethylenglykol, Diethylenglykol, 1,2- bzw. 1,3- Propylenglykol, Dipropylenglykol, Decandiol-1,10, Glycerin, Trimethylolpropan und vorzugsweise Butandiol-1,4 und Hexandiol-1,6. Sofern zur Herstellung der Polyesterpolyole mehrwertige, insbesondere dreiwertige Alkohole mitverwendet werden, wird deren Gehalt zweckmäßigerweise so berechnet, daß die Funktionalität der erhaltenen Polyesterole maximal 6, vorzugsweise 2 bis 4 ist.

Die Abmischungen der Prepolymeren mit den Diisocyanatotoluolen und/oder der Komponente a1) können als Isocyanatkomponenten bei der Herstellung von elastischen, offenzelligen Schaumstoffen, vorzugsweise Formschaumstoffen wie oben bereits erwähnt, verwendet werden.

Die erfindungsgemäßen Abmischungen werden zu elastischen, offenzelligen Weichschaumstoffen verarbeitet und zwar durch Umsetzung mit

1. Verbindungen mit mindestens zwei gegenüber Isocyanaten reaktionsfähigen Wasserstoffatomen mit einem Molekulargewicht in der Regel von 400 bis 10.000. Hierunter versteht man vorzugsweise Hydroxylgruppen aufweisende Verbindungen, insbesondere 2 bis 6, vorzugsweise 2 bis 4 Hydroxylgruppen aufweisende Verbindungen, speziell solche vom Molekulargewicht 1.000 bis 6.000, vorzugsweise 3.000 bis 6.000, z.B. 2 bis 6, vorzugsweise 2 bis 4 Hydroxylgruppen aufweisende Polyether oder Polyester, insbesondere Polyether, wie sie für die Herstellung von homogenen und von zellförmigen Polyurethanen an sich bekannt sind und wie sie z.B. in der DE-OS 2 832 253, Seiten 11 ff, beschrieben werden. Vorzugsweise weisen sie eine OH-Zahl von 28 bis 56 auf.

2. Gegebenenfalls Verbindungen mit mindestens 2 gegenüber Isocyanaten reaktionsfähigen Wasserstoffatomen und einem Molekulargewicht von 62 bis 399. Auch in diesem Fall versteht man hierunter insbesondere Hydroxylgruppen aufweisende Verbindungen, die als Kettenverlängerungsmittel oder Vernetzungsmittel dienen. Diese Verbindungen weisen im allgemeinen 2 bis 4, gegenüber Isocyanaten reaktionsfähige Wasserstoffatome auf. Beispiele hierfür werden in der DE-OS 2 832 253, Seiten 10 ff, beschrieben.

3. Wasser als Treibmittel in einer Menge von 1 bis 15 Gew.-Teilen pro 100 Gew.-Teile der Komponente 1).

4. Gegebenenfalls Hilfs- und Zusatzmittel wie
   a) leicht flüchtige organische Substanzen als weitere Treibmittel,
   b) Reaktionsbeschleuniger und Reaktionsverzögerer der an sich bekannten Art in den an sich üblichen Mengen,
   c) oberflächenaktive Zusatzstoffe, wie Emulgatoren und Schaumstabilisatoren,
   ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 ff, beschrieben.

Weitere Beispiele von gegebenenfalls mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Die Reaktionskomponenten werden vorzugsweise nach dem an sich bekannten Einstufenverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen werden im Kunststoff-Handbuch, Band VII, herausgegeben von Vieweg und Höchtlen, Carl-Hanser-Verlag, München 1966, z.B. auf den Seiten 121 bis 205, beschrieben.

Die Verschäumung wird vorzugsweise in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, in Frage. In der Form schäumt das schaumfähige Reaktionsgemisch auf und bildet den Formkörper. Man kann in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird unter "over-charging" gearbeitet; eine derartige Verfahrensweise ist z.B. aus den US-Patentschriften 3 178 490 und 3 181 104 bekannt.

Die Vorteile der erfindungsgemäßen Gemische liegen in der Verbesserung der physikalischen Eigenschaften der damit hergestellten Schaumstoffe, in der Verarbeitungssicherheit wie Dosiergenauigkeit und in der Verbesserung der Schaumstoffqualität.

Die Verwendung der erfindungsgemäßen Abmischungen ermöglicht es, höhere Stauchhärten bei den Schaumstoffen zu erreichen. Dies erlaubt dem Verarbeiter dieser Abmischungen zur Erzielung einer gewünschten Schaumstoffhärte auf die Mitverwendung von teuren Füllstoffethern oder zusätzlichen Vernetzern zu verzichten.

Die Abmischungen zeichnen sich durch eine hohe Viskosität aus. Diese hohen Viskositäten haben insofern verfahrenstechnische Vorteile, als daß die Dosiergenauigkeit von Pumpen bei hohen Viskositäten günstiger ist. Eine korrekte Dosierung der Komponenten ist jedoch für eine moderne, qualitätsbewußte Schaumstoffproduktion unerläßlich.

Die hohe Polarität der Polyesterpolyolkomponente wirkt sich zudem vorteilhaft auf die Schaumreaktion aus. Ein emulgierender Effekt auf das ebenfalls sehr polare Wasser verbessert die Reaktivität und führt zu stabilen Schaumstoffen. Außerdem zeichnen sich diese Schaumstoffe durch eine angenehme und elastische Oberfläche aus.

Die Erfindung soll anhand von Beispielen näher erläutert werden.

Beispiele

Ausgangsstoffe für die Schaumstoffherstellung

| | |
|---|---|
| Prepolymer: | 100 Gew.-Teile eines Polyesterpolyols, hergestellt durch Reaktion von Ethylenglykol und Adipinsäure, mit einer OH-Zahl von 55, werden mit reinem 4,4'-Diphenylmethandiisocyanat unter Rühren zu einem Prepolymeren mit einem NCO-Gehalt von 17 Gew.-% umgesetzt. |
| Isocyanat: | Toluylendiisocyanat (80 Gew.-% 2,4-Isomer und 20 Gew.-% 2,6-Isomer) |
| Polyether A: | Trifunktioneller Ethylenoxid/Propylenoxid-Polyether (OH-Zahl 30, Ethylenoxid-Gehalt 14 Gew.-%) |
| Polyether B: | Polyether A zusätzlich modifiziert mit 20 Gew.-% Styrolacrylnitril-Polymer |
| Katalysator 1: | Triethylendiamin, 33 gew.-%ig in Dipropylenglykol |
| Katalysator 2: | Di-(2-dimethylaminoethyl)-methylamin |
| Katalysator 3: | Diethanolamin |
| Stabilisator: | B 8629, Polysiloxan, Handelsprodukt der Firma Goldschmidt AG |

Die Herstellung des Schaumstoffes erfolgt wie in der Beschreibung ausgeführt.

Die Ergebnisse sind den Tabellen I und II zu entnehmen.

4

Tabelle I

| | Anteil (Gew.-%) | Viskosi-tät (mPas) bei 25° C | NCO-Gehalt (Gew.-%) |
|---|---|---|---|
| Prepolymer | – | 3 | 48,3 |
| Isocyanat | 100 | | |
| Prepolymer | 15 | 13 | 43,6 |
| Isocyanat | 85 | | |
| Prepolymer | 20 | 22 | 42,0 |
| Isocyanat | 80 | | |
| Prepolymer | 45 | 50 | 35 |
| Isocyanat | 55 | | |

Tabelle I

## Tabelle II

|  | Beispiel 1 | Beispiel 2 |
|---|---|---|
| Polyether A | 80 Gew.-% | 80 Gew.-% |
| Polyether B | 20 " | 20 " |
| Wasser | 3,2 " | 3,2 " |
| Katalysator 1 | 0,5 " | 0,5 " |
| Katalysator 2 | 0,06 " | 0,06 " |
| Katalysator 3 | 1,2 " | 1,2 " |
| Stabilisator | 0,5 " | 0,5 " |
| Prepolymer | - | 20 " |
| Isocyanat | 100 " | 80 " |
| Kennzahl * | 100 | 100 |
| Rohdichte (kg/m$^3$), gemessen am Schaumstoff | 39 | 38 |
| Stauchhärte bei 40 % Kompression (kPa), gemessen am Schaumstoff | 2,2 | 2,7 |

\* Die Kennzahl errechnet sich nach der allgemeinen Formel wie folgt:

Kennzahl = Quotient aus Anzahl der NCO-Gruppen dividiert durch Anzahl der NCO-reaktiven Gruppen, multipliziert mit 100.

Der Tabelle I sind die Viskositäten des Isocyanats bzw. der Abmischungen des Prepolymers mit Toluylendiisocyanat sowie die NCO-Gehalte zu entnehmen,

Die Stauchhärte des Schaumstoffes, der unter Verwendung der erfindungsgemäßen Prepolymerabmischung hergestellt wurde, liegt um 22 % höher als die eines üblichen Schaumstoffes (s. Tabelle II).

## Patentansprüche

1. Flüssige Gemische einer Viskosität bei 25°C von 5 bis 100 mPas und einem NCO-Gehalt von 35 bis 47 Gew.-% bestehend im wesentlichen aus

a) Urethangruppen enthaltenden, flüssigen Prepolymeren mit einem NCO-Gehalt von 5 bis 30 Gew`-

% auf Basis von
  a1) Polyisocyanaten oder Polyisocyanatgemischen der Diphenylmethanreihe und in unterschüssiger Menge
  a2) Polyesterpolyole mit einem Molekulargewicht von 500 bis 10.000 in Abmischung mit
  b) Diisocyanatotoluolen und/oder der Komponente a1)
im Gewichtsverhältnis von a) : b) von 1:20 bis 20:1.

2. Flüssige Gemische gemäß Anspruch 1 mit Reaktionsprodukten von Dicarbonsäuren oder Anhydriden mit mehrwertigen Alkoholen mit Molekulargewichten von 62 bis 200 im Überschuß als Komponente a2).

3. Flüssige Gemische gemäß Anspruch 1 mit Reaktionsprodukten von Adipinsäure und/oder Terephthalsäure mit Diethylenglykol und/oder Glyzerin als Komponente a2).

4. Flüssige Gemische gemäß Anspruch 1 mit technischen Gemischen aus 2,4- mit bis zu 45 Gew`-% 2,6-Diisocyanatotoluol als Diisocyanatotoluolkomponente.

5. Flüssige Gemische gemäß Anspruch 1 mit technischen Gemischen aus 4,4'-, 2,4'- und bis zu 10 Gew.-% 2,2'-Diisocyanatodiphenylmethan oder mit Gemischen dieser Isomerengemische mit ihren höherfunktionellen Homologen, wie sie bei der Phosgenierung von Anilin/Formaldehyd-Kondensaten entstehen, als Komponente a1).

6. Flüssige Gemische gemäß Anspruch 1 mit Prepolymeren, in denen das Äquivalenzverhältnis der NCO-Gruppen der Komponente a1) zu den OH-Gruppen der Komponente a2) zwischen 20:1 und 1:5 liegt.

7. Verwendung der flüssigen Gemische gemäß den Ansprüchen 1 bis 6 zur Herstellung von elastischen offenzelligen Weichschaumstoffen, vorzugsweise Formschaumstoffen.

**Patentansprüche für folgenden Vertragsstaat: ES**

1. Verfahren zur Herstellung von flüssigen Gemischen einer Viskosität bei 25 °C von 5 bis 100 mPas und einem NCO-Gehalt von 35 bis 47 Gew.-%, dadurch gekennzeichnet, daß
  a) Urethangruppen enthaltende, flüssige Prepolymere mit einem NCO-Gehalt von 5 bis 30 Gew.-% auf Basis von
    a1) Polyisocyanaten oder Polyisocyanatgemischen der Diphenylmethanreihe und in unterschüssiger Menge
    a2) Polyesterpolyole mit einem Molekulargewicht von 500 bis 10.000 mit
  b) Diisocyanatotoluolen und/oder der Komponente a1)
im Gewichtsverhältnis von a) : b) von 1:20 bis 20:1 abgemischt werden.

2. Verfahren gemäß Anspruch 1, dadurch gekennzeichnet, daß Reaktionsprodukte von Dicarbonsäuren cder Anhydriden mit mehrwertigen Alkoholen mit Molekulargewichten von 62 bis 200 im Überschuß als Komponente a2) eingesetzt werden.

3. Verfahren gemäß Anspruch 1, dadurch gekennzeichnet, daß Reaktionsprodukte von Adipinsäure und/oder Terephthalsäure mit Diethylenglykol und/oder Glyzerin als Komponente a2) eingesetzt werden.

4. Verfahren gemäß Anspruch 1, dadurch gekennzeichnet, daß technische Gemische aus 2,4- mit bis zu 45 Gew.-% 2,6-Diisocyanatotoluol als Diisocyanatotoluolkomponente eingesetzt werden.

5. Verfahren gemäß Anspruch 1, dadurch gekennzeichnet, daß technische Gemische aus 4,4'-, 2,4'- und bis zu 10 Gew.-% 2,2'-Diisocyanatodiphenylmethan oder Gemische dieser Isomerengemische mit ihren höherfunktionellen Homologen, wie sie bei der Phosgenierung von Anilin/Formaldehyd-Kondensaten entstehen, als Komponente a1) eingesetzt werden.

6. Verfahren gemäß Anspruch 1, dadurch gekennzeichnet, daß Prepolymere, in denen das Äquivalenzverhältnis der NCO- Gruppen der Komponente a1) zu den OH-Gruppen der Komponente a2) zwischen 20:1 und 1:5 liegt, eingesetzt werden.

7. Verfahren zur Herstellung elastischer offenzelliger Weichschaumstoffe, vorzugsweise Formschaumstoffe, dadurch gekennzeichnet, daß die nach den Verfahren gemäß der Ansprüche 1 bis 6 hergestellten flüssigen Gemische eingesetzt werden.

**Europäisches Patentamt**

# EUROPÄISCHER RECHERCHENBERICHT

Nummer der Anmeldung

**EP 90 12 4679**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 239 704  (I.C.I)<br>* Ansprüche 1,2 Spalte 2, Zeilen 32-40; Beispiel 3 *<br>— — — | 1 | C 08 G 18/10<br>C 08 G 18/42<br>C 08 G 18/76 |
| D,A | GB-A-1 369 334  (I.C.I)<br>* Ansprüchhe 1,2; Seite 1, Zeile 78 - Seite 2 Zeile 19 *<br>— — — | 1 | |
| A | EP-A-0 344 551  (BAYER)<br>* Ansprüche 1,4,5,8,9; Seite 3, Zeilen 21-57<br>* & DE-A-3 818 769 (Kat. D)<br>— — — — — | 1 | |
| | | | **RECHERCHIERTE SACHGEBIETE (Int. Cl.5)**<br><br>C 08 G |
| | Der vorliegende Recherchenbericht wurde für alle Patentansprüche erstellt | | |

| Recherchenort | Abschlußdatum der Recherche | Prüfer |
|---|---|---|
| Den Haag | 14 Juni 91 | VAN PUYMBROECK M.A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus anderen Gründen angeführtes Dokument
    ....................................................................
& : Mitglied der gleichen Patentfamilie,
    übereinstimmendes Dokument